(19) Europäisches Patentamt

European Patent Office

Office européen des brevets

(11) **EP 0 971 220 A2**

(12) **EUROPÄISCHE PATENTANMELDUNG**

(43) Veröffentlichungstag:
12.01.2000 Patentblatt 2000/02

(51) Int. Cl.⁷: **G01K 7/42**, B60S 1/08

(21) Anmeldenummer: **99108994.7**

(22) Anmeldetag: **06.05.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **06.06.1998 DE 19825409**

(71) Anmelder: **ROBERT BOSCH GMBH**
**70442 Stuttgart (DE)**

(72) Erfinder: **Kessler, Martin**
**77815 Buehl (DE)**

(54) **Vorrichtung zur Erfassung der Wicklungstemperatur eines über eine Steuerschaltung betriebenen Elektromotors**

(57)     Die Erfindung bezieht sich auf eine zum Erfassen der Wicklungstemperatur eines über eine Steuerschaltung (ST) betriebenen Etektromotors (M). Eine einfache, zuverlässige Erfassung der Wicklungstemperatur des Elektromotors wird dadurch erzielt, daß ein Temperatursensor (S) zum Erfassen der Temperatur eines in der Steuerschaltung (ST) vorhandenen, von dem Motorstrom ($I_M$) durchflossenen Bauteils (B) vorgesehen ist und daß die Steuerschaltung (ST) eine Auswerteeinrichtung aufweist, mit der die Wicklungstemperatur aus dem Signal des Temperatursensors (S) ermittelbar ist.

**Beschreibung**

Stand der Technik

Die Erfindung bezieht sich auf eine Vorrichtung zum Erfassen der Wicklungstemperatur eines über eine Steuerschaltung betriebenen Elektromotors.

Eine Vorrichtung dieser Art ist in der DE 28 52 676 C2 erwähnt, wobei zum einen ein in einen Betriebsstromkreis des Motors geschalteter Thermoschalter angegeben ist und zum andern vorgeschlagen wird, von der Drehzahl des Motors abhängige Impulse zu erfassen, um auf die Belastung zurückzuschließen. Mit beiden Maßnahmen wird kein direktes Maß für die Wicklungstemperatur erhalten, sondern nur indirekt auf eine mit einer Temperaturerhöhung einhergehende Änderung des Motorbetriebs reagiert.

Der Erfindung liegt die Aufgabe zugrunde, eine Vorrichtung der eingangs genannten Art bereitzustellen, mit der die Wicklungstemperatur des Elektromotors möglichst genau erfaßt werden kann.

Diese Aufgabe wird mit den Merkmalen des Anspruchs 1 gelöst. Hiernach ist vorgesehen, daß ein Temperatursensor zum Erfassen der Temperatur eines in der Steuerschaltung vorhandenen, von dem Motorstrom durchflossenen Bauteils vorgesehen ist und daß die Steuerschaltung eine Auswerteeinrichtung aufweist, mit der die Wicklungstemperatur aus dem Signal des Temperatursensors ermittelbar ist. Da die Temperatur des von dem Motorstrom durchflossenen Bauteils eng mit der Wicklungstemperatur des Elektromotors zusammenhängt, kann aus den von dem Temperatursensor gelieferten Temperaturwerten mit relativ hoher Genauigkeit auf die Wicklungstemperatur geschlossen werden. Da kein Abgriff an der rotierenden Motorwicklung erforderlich ist, kann die Temperaturerfassung mit einfachen Maßnahmen erfolgen.

Ein einfacher Aufbau besteht darin, daß die Auswerteeinrichtung eine Speichereinrichtung umfaßt, in der Daten abgelegt sind, welche eine Zuordnung der erfaßten Temperaturwerte zu der Wicklungstemperatur beinhalten. In der Speichereinrichrung kann eine zuvor ermittelte Kennlinie abgelegt werden, mit der die erfaßten Temperaturwerte zum Ermitteln der Wicklungstemperatur in Beziehung gesetzt werden.

Eine zuverlässige Temperaturerfassung wird dadurch begünstigt, daß das Bauelement ein Meßwiderstand oder ein Transistor ist.

Eine einfache Auswertung, die mit relativ wenigen Daten auskommt, wird dadurch ermöglicht, daß die Wicklungstemperatur unter der Annahme ermittelt wird, daß das Verhältnis $\Delta\vartheta_M/\Delta\vartheta_B$ der Wicklungstemperatur-änderung zu der Temperaturänderung des Bauelements ein konstanter Faktor ist, der in der Auswerteeinrichtung vorgegeben oder vorgebbar ist.

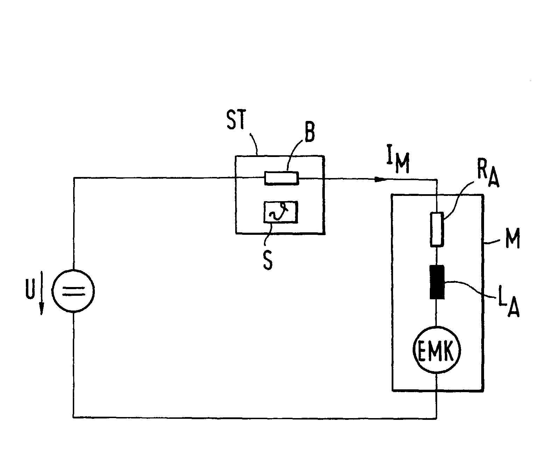

Die Erfindung wird anhand eines Ausführungsbeispiels unter Bezugnahme auf die Zeichnung näher erläutert. Die Figur zeigt schematisch eine Vorrichtung zum Erfassen der Wicklungstemperatur eines Elektromotors M.

Der Elektromotor M wird mittels einer Versorgungsspannung u über eine Steuerschaltung ST mit einem Motorstrom $I_M$ angesteuert. Die Steuerschaltung ST weist ein von dem Motorstrom $I_M$ durchflossenes Bauelement B, z. B. einen Meßwiderstand oder einen Transistor, sowie einen Temperatursensor S auf, mit dem die Temperatur des Bauelements B erfaßt wird. Die Temperaturwerte des Temperatursensors S werden an eine Auswerteeinrichtung weitergegeben. Als wesentliche Elemente des Elektromotors M sind dessen Wicklungswiderstand $R_A$, die Wicklungsinduktivität $L_A$ sowie die elektromotorische Kraft EMK in Form der induzierten Gegenspannung angegeben.

Die Motorwicklung mit dem Wicklungswiderstand $R_A$ wird bei dem Motorstrom $I_M$ durch eine Ver-lustleistung

$$P_M = I^2_M \cdot R_A$$

erwärmt. Die Temperaturänderung $\Delta\vartheta_M$ des Motors ergibt sich mit dem thermischen Widerstand $R_{thM}$ der Motorwicklung nach

$$\Delta\vartheta_M = P_M \cdot R_{thM}.$$

Während der Ansteuerung des Elektromotors M wird das Bauelement B, das vom Motorstrom $I_M$ durchflossen ist, erwärmt. Mit dem ohmschen Widerstand $R_B$ und dem thermischen Widerstand $R_{thB}$ des Bauelements B beträgt dessen Erwärmung

$$\Delta\vartheta_B = P_B \cdot R_{thB} = I^2_M \cdot R_B \cdot R_{thB}.$$

In der Regel ist das Verhältnis $\Delta\vartheta_M/\Delta\vartheta_B$ ein konstanter Faktor, so daß mittels der Auswerteeinrichtung durch Messen der Temperatur des Bauelements B auf die Temperatur der Motorwicklung geschlossen werden kann. Es genügt den konstanten Faktor in einer Speichereinrichtung der Auswerteeinrichtung abzulegen, so daß mit den erfaßten Temperaturwerten auf einfache Weise die Wicklungstemperatur mit einem Programm bestimmt werden kann.

Sollen weitere Faktoren berücksichtigt werden, so kann eine Kennlinie, die den entsprechenden Zusammenhang zwischen der Temperatur des Bauelements B und der Wicklungstemperatur widergibt, vorab gemessen und in der Speichereinrichtung abgelegt werden. Die Wicklungstemperatur kann dann durch einfache Zuordnung der gemessenen Temperaturwerte zu der jeweiligen Wicklungstemperatur bestimmt werden. Dabei können auch einfache Interpolationsalgorithmen verwendet werden.

**Patentansprüche**

**1.** Vorrichtung zum Erfassen der Wicklungstemperatur eines über eine Steuerschaltung (ST) betriebenen Elektromotors (M),
dadurch gekennzeichnet,

daß ein Temperatursensor (S) zum Erfassen der Temperatur eines in der Steuerschaltung (ST) vorhandenen, von dem Motorstrom ($I_M$) durchflossenen Bauteils (B) vorgesehen ist und

daß die Steuerschaltung (ST) eine Auswerteeinrichtung aufweist, mit der die Wicklungstemperatur aus dem Signal des Temperatursensors (S) ermittelbar ist.

2. Vorrichtung nach Anspruch 1,
dadurch gekennzeichnet,

daß die Auswerteeinrichtung eine Speichereinrichtung umfaßt, in der Daten abgelegt sind, welche eine Zuordnung der erfaßten Temperaturwerte zu der Wicklungstemperatur beinhalten.

3. Vorrichtung nach Anspruch 1 oder 2,
dadurch gekennzeichnet,

daß das Bauelement (B) ein Meßwiderstand oder ein Transistor ist.

4. Vorrichtung nach einem der vorhergehenden Ansprüche,
dadurch gekennzeichnet,

daß die Wicklungstemperatur unter der Annahme ermittelt wird, daß das Verhältnis $\Delta\vartheta_M/\Delta\vartheta_B$ der Wicklungstemperaturänderung zu der Temperaturänderung des Bauelements (B) ein konstanter Faktor ist, der in der Auswerteeinrichtung vorgegeben oder vorgebbar ist.